(19) Europäisches Patentamt
European Patent Office
Office européen des brevets

(11) Publication number: **0 376 689 A2**

# (12) EUROPEAN PATENT APPLICATION

(21) Application number: 89313602.8

(22) Date of filing: 27.12.89

(51) Int. Cl.5: **B01J 31/06, B01J 31/12, B01J 35/00, C25B 11/06, H01M 4/90**

(30) Priority: 28.12.88 US 291086

(43) Date of publication of application: 04.07.90 Bulletin 90/27

(84) Designated Contracting States: AT BE CH DE ES FR GB GR IT LI LU NL SE

(71) Applicant: IDAHO RESEARCH FOUNDATION, INC.
PO Box 9645
Moscow Idaho 83843(US)

(72) Inventor: Czuchajowski, Leszek
838 Nylarol
Moscow Idaho 83843(US)
Inventor: Malinski, Tadeusz
3735 Locust
Lake Orion Michigan 48035(US)

(74) Representative: Harrison, David Christopher et al
MEWBURN ELLIS 2 Cursitor Street
London EC4A 1BQ(GB)

## (54) Polymeric films of metalloporphyrins as conductive materials for electrocatalysis.

(57) Polymerized metallized meso-tetra-(p-substituted-phenyl) metalloporphyrins or meso-[2.2]-paracyclophane substituted porphyrins are provided for use as electrocatalysts. The phenyl groups are substituted with atoms having unshared pairs of electrons, such as chalcogen and nitrogen. The polymerized compositions can be used as electrocatalysts for the production of hydrogen and oxygen from water or oxidation of a variety of fuels.

EP 0 376 689 A2

Xerox Copy Centre

# POLYMERIC FILMS OF METALLOPORPHYRINS AS CONDUCTIVE MATERIALS FOR ELECTROCATALYSIS

The subject invention concerns the use of metalloporphyrin polymeric films as electrocatalysts.

There has been for a long time substantial interest in the use of organic materials as electrical conductors. Various compositions have found use, such as derivatives of tetracyanoethylene, quinodimethans, polyphenylenes, and the like. Organic electrically conductive materials have many desirable characteristics. The organic compositions can be readily formed, can have a variety of tensile properties, by themselves or in conjunction with other materials, can be readily coated onto a wide variety of substrates, and may be produced with a range of electrical characteristics. In some instances, the organic materials have been doped, with iodine or metals, to provide for their conductive properties.

There is substantial interest in providing catalysts which can be used in chemical reactions, where the utilization of the electrical energy is highly efficient. Furthermore, satisfactory catalysts should be stable under the conditions of the electrolytic reaction, so as to provide for extended periods of time of use, and high conversion ratios. There is, therefore, substantial interest in being able to develop new catalyst.s which may find use in producing useful products efficiently, where the catalysts can be readily prepared inexpensively.

Abstracts of papers, 1968 ACS National Meeting, Los Angeles, CA, September 25 - 30, 1988, INOR 202, describes the electrochemistry of solutions and polymeric films with metalloporphyrins. Other references of interest include GB Patent No. 461,764, British Patent Application No. 804,483 (1980), JP 82/21,069 and JP 82/46,154. See also Malinski et al, ibid., INOR 302 and Malinski et al, Electrochemical Society Meeting, Honolulu, HI, 1987, Vol. 87-2, Extended Abstract 1285.

The present invention provides novel compositions for use as electrocatalysts, as well as their methods of preparation. The subject compositions are polymerizable meso-aryl metalloporphyrins, where the compositions can be electrically oligomerized. The subject compositions include meso-tetra-(p- X-phenyl) metalloporphyrins, where X is a group having an unshared pair of electrons and capable of forming a double bond to carbon; meso-tetraphenylporphyrins in which one to four phenyls are displaced by [2.2]paracyclophane; or [2.2]paracyclophane substituted porphyrins, where the [2.2]paracyclophanes may be substituted or unsubstituted, and the remaining meso-positions may be substituted or unsubstituted. The aryl porphyrins are metallated and the resulting metalloorganic porphyrin used as an electrolyte in an electrochemical cell, where by scanning the potential from 0 to 1 volt, the metalloorganic porphyrin will form a polymerized coat on the working electrode to provide an anodic electrocatalyst.

In the accompanying drawings:

Figure 1 is a graph of cyclic voltammograms of oxidation of methanol and water with a polymeric porphyrin electrode and a carbon electrode;

Figure 2 is the current density measured at different potentials during the electrolysis of water in an electrolytic cell; the anode is polymeric porphyrin with NiII on carbon electrode; the cathode is platinum foil.

(1) 20 °C, 0.1 Molar KOH;
(2) 40 °C, 0.1 M KOH;
(3) 20 °C, 1 M KOH;
(4) 40 °C, 1 M KOH.

Embodiments of the present invention provide novel compositions and methods for their use as electrocatalysts, where the compositions comprise polymerized meso-aryl porphyrins, where the aryl group is electrically polymerized. The aryl groups are conveniently p-substituted phenyl groups, where the substituent is an electron donating group or [2.2 ]paracyclophanes, either unsubstituted or substituted. Exemplary compounds include: i.) meso-tetra-(p-X-phenyl) metalloporphyrins, where X is a group with an atom bonded to an aryl carbon atom having an unshared pair of electrons; or ii.) meso-tetraphenylporphyrins in which one to four phenyls are displaced by [2.2]paracyclophane; or iii.) [2.2]paracyclophane substituted porphyrins, where the [2.2]paracyclophanes may be substituted or unsubstituted and the remaining meso-positions may be substituted or unsubstituted. The polymerized composition is usually employed on a conductive substrate, where the resulting combination may be used as an anode in an electrochemical cell for electrocatalysis of a wide variety of inorganic and organic compounds.

The aryl substituents are at the meso positions of the porphyrin. The phenyl groups in the absence of a [2.2]paracyclophane will have from one to three, usually from one to two substituents, where one of the substituents is at the para position and will have an unshared pair of electrons in conjugation with the ring. These atoms will for the most part be capable of forming double bonds with carbon to form quinoidal structures which are capable of polymerization to the electrocatalyst.. Atoms which find use include oxygen, sulfur, nitrogen, and the like, where the atom has at least one hydrogen. Other than hydrogen it will normally be alkyl of from 1 to 6, usually 1 to 3 carbon atoms. Any additional substituents will be at other than the ortho positions namely the 3-,5-positions and will usually be groups having an atom bonded to the aryl carbon atom having an unshared pair of electrons, or groups being less than about 0.3, preferably less than about 0.2 in the meta position in the Hammett series (Jaffe, Chem. Rev. 53:191-261 (1953) such as alkyl, silyl, amino, oxy, thio, halo, etc. generally of from 0 to 6, usually from 0 to 3 carbon atoms and from 0 to 3 usually from 0 to 2 heteroatoms, which would usually be oxygen, sulphur and nitrogen.

The [2.2]paracyclophanes may be similarly substituted, where the para positions are already occupied. Since the [2.2]paracyclophane can be individually polymerized as compared to the phenyl groups, which require at least two p-phenyl groups bonded at the meso-positions, the other meso-positions may be substituted or unsubstituted, particularly with hydrocarbon substituents, more particularly phenyl. Usually, the groups will not be more than 10 carbon atoms.

The para-group substituents on the phenyls will usually be hydroxy, amino, alkylamino or thiol, although these groups may be substituted with other substituents which do not interfere with the polymerization of the metallated tetrakisphenylporphyrin. The other groups may be methyl, ethyl, propyl, hydroxy, methoxy, ethoxy, amino, dimethylamino, ethylthio, methoxymethyl, or the like.

The subject aryl substituted porphyrins may be prepared in conventional ways, by combining the appropriate aldehyde with the appropriate pyrrole in an acidic medium, particularly in a solvent comprising an aliphatic carboxylic acid up to 6 carbon atoms, usually from 2 to 5 carbon atoms, particularly 3 carbon atoms, and the mixture heated for at least about 30 min, usually not more than about 3 h, until the reaction is complete. The product may then be isolated.

For the most part, the pyrrole groups will not be substituted, since substitution is not required and the unsubstituted pyrrole is satisfactory. However, if desired, the pyrrole groups may be substituted, particularly with aliphatic groups of from 1 to 4, usually 1 to 2 carbon atoms, where the aliphatic groups may be substituted or unsubstituted, particularly with oxy, thio, non-oxo-carbonyl, e.g. esters, amides, and carboxylic acids or the like.

The subject porphyrins may be symbolized with the following formula:

meso-substituted porphyrin (unsubstituted or p-substituted phenyl)$_a$ ([2.2]paracyclophane)$_b$,

where a varies from 0 to 4 and b varies from 0 to 4, the sum of a + b ≧ 1, where a may be 0 when b is one

The metalloorganic compound may have a polyvalent metal ion, normally in a reduced form, of any of groups IB, IIB, VIB, VIIB, and VIII of the Periodic chart, particularly cobalt, iron, nickel, and manganese.

The metalloorganic compounds may be readily prepared by combining the porphyrin prepared as described above with a solution of the metal in a polar organic solvent, particularly a neutral polar organic solvent, such as dimethylformamide, acetamide, acetonitrile, or the like. After heating the mixture to an elevated temperature, generally between about 40 and 80 °C, water may be added to the reaction mixture slowly and the mixture allowed to stand over night, when crystals form.

In order to prepare the electrocatalyst, the subject metalloporphyrins are polymerized onto a substrate by electrolytic oxidation, conveniently employing a chemical cell. The metalloorganic porphyrin is used as the electrolyte in an electrochemical cell, employing an aqueous or organic solvent. By varying the voltage in an aqueous medium between about 0 to 1 volt, a film will form on the working electrode of an electrochemical cell comprising a working electrode, counter electrode, and a reference electrode, where the reference electrode may be the standard calomel electrode. The working electrode will be polymerized conductive metalloporphyrin. The metalloporphyrin can be immobilized on any conductive substrate, such as porous carbon, platinum, glass-carbon, indium-oxide, rhodium, palladium, silver, or the like, where desirably the substrate will be inert and non-reactive with the polymeric film.

Media which may be employed include aqueous or non-aqueous media. By providing for repeating scans, monolayers may be continuously added so as to provide a fairly thick polymerized layer on the substrate.

The working electrode with the polymeric film may then be conditioned. Usually, the polymeric film will first be washed with water to remove any unpolymerized porphyrin. The electrode may then be conditioned by using the electrode as an anode in a conducting medium analogous to the one used for the polymerization, but lacking the porphyrin electrolyte.

The resulting polymeric metalloorganic porphyrins may be used as anodes in electrocatalytic processes. Thus the electrocatalysts may be used to cause a susceptible compound to undergo a redox reaction to provide a redox product. The compound of interest may be introduced into the electrically conductive medium or may be the medium, particularly for electrolysis. The subject materials may find use as catalysts in the electrolysis of water to produce hydrogen and oxygen; in the production of hydrogen as fuel for fuel cells; as catalysts for electrochemical degradation of organic wastes; as anodic material for fuel cells for the catalysis of oxidation of fuels, such as hydrazine, ammonia, methanol, etc.; as catalysts for organic electrosyntheses; as highly sensitive chemical and electrochemical sensors; as solid electrolytes in batteries; as catalysts for electrolytic production of heavy water; as catalysts in photoelectrochemical processes and the like.

Of particular interest is the use of the subject compositions in electrocatalytic oxidation of organic materials at very low potentials, for the synthesis of aldehydes, organic acids, as well as other oxygenated organic compounds. It is found that the overall potential for the oxidation of water is reduced by about 0.5 V by the subject compositions in comparison to currently known catalysts.

The subject compositions provide substantial advantages as catalysts in electrolysis, providing for easy electrochemical regeneration of the catalyst, high stability in aqueous as well as in non aqueous media, low cost, low density (weight), and the like.

Specific conductivity of the subject metalloporphyrins is very high and dependent on the conditions of the process of electropolymerization. Minimum specific conductivity is at least 800 mhos-$cm^{-1}$ and can be as high as a few thousand mhos-$cm^{-1}$. It can be a thousand times higher than graphite. The subject compositions may therefore also be used successfully in a number of electrical devices without much loss of current due to material resistivity.

The following examples are offered by way of illustration and not by way of limitation.

## EXPERIMENTAL

### Synthesis of tetra-(3-methoxy-4-hydroxyphenyl)-porphyrin and its nickel (II) complex

#### Chemicals

Vanillin (Aldrich) 11.5g (75.6 mmole), pyrrole (Aldrich) 5.2 mL, i.e. 5.0 g (75 mmole), propionic acid (Fluka) 150 mL.

#### Procedure

In 0.5 L three-necked round-bottomed flask equipped with reflux condenser, sealed mechanical stirrer and dropping funnel, the solution of vanillin in 120 mL of propionic acid was placed. The flask was heated until the solution was boiling and then pyrrole dissolved in 30 mL of propionic acid was introduced within five minutes. The solution was stirred and kept boiling for 1.5 hr. After cooling to room temperature the solution was filtered on a Buchner funnel and the crystals washed with acetone until the filtrate was almost colorless. The purple glistening crystals, 2.42g (16.1%) were pure enough for metallation.

#### Metallation Procedure

Tetra-(3-methoxy-4-hydroxyphenyl)porphyrin 1.00g (1.25 mmole)
nickel (II) acetate tetrahydrate (Aldrich) 0.373 g (1.50 mmole)
N,N-dimethylformamide (DMF), 30 mL.
The porphyrin was dissolved in 20 mL of boiling DMF and the solution of nickel acetate in 10 mL of DMF was added in one portion. The reaction mixture was refluxed for 1 hr. Then, 30 mL of water was introduced drop by drop to the boiling solution within 1 hr. The reaction mixture was left overnight and the separated crystals were filtered off, washed with methanol and dried. The yield was 1.02 g.

### Synthesis of *meso*-[2.2]paracyclophanyltriphenyl porphyrin

#### Chemicals

[2.2]Paracyclophane-4-carbaldehyde (Hopf and Raulfus, Isr. J. Chem. 25, 210 (1985)) 2.36g (10 mmole), benzaldehyde (Aldrich) 3.2 mL (30 mmole), pyrrole (Aldrich) 2.8 mL (40mmole), propionic acid (Fluka) 400 mL.

#### Procedure

Paracyclophane aldehyde and benzaldehyde were dissolved in 350 mL of propionic acid. The solution was heated under reflux in a 1-L round-bottom flask equipped with a magnetic stirrer and pyrrole in 50 mL propionic acid was added in one portion. The reaction mixture turned instantly dark and was refluxed and mixed for better aeration for 1 h. The propionic acid was distilled off *in vacuo*. Triethylamine (1 mL) was then added and the resultant solid black material washed twice with 50 mL portions of absolute ethanol. The dry product was dissolved in a 1,2-dichloroethane/chloroform mixture (1:1), and 40 g of silica gel was added. The suspension was warmed (50° C) and mixed for 30 min and then evaporated to dryness. The resultant black powder was put on top of a chromatographic column packed with 200 g of silica gel and then washed with dichloroethane/petroleum ether (1:1) to remove the low molecular weight, fast-moving impurities. The porphyrin fraction was eluted with dichloromethane/ethyl acetate (9:1). After rotary evaporation, 2.7 g of partially purified material was obtained, yield 36%.

The material which contained, besides meso-tetraphenylporphyrin, the mixed porphyrins in which the ratio of two kinds of the meso-substituents varied from 4:0 to 1:3 of [2.2]-paracyclophanyl:phenyl, was further separated into the components by chromatography. Application of column chromatography with 120 g Florisil packing and 1,2-dichloroethane as solvent and dichloromethane as eluent provided reasonably pure [2.2]paracyclophanyltriphenyl porphyrin with a yield of 15-20% of the partially purified material. The second major component was the di[2.2]-paracyclophanyldiphenyl porphyrin, about 5%.

Metallation was achieved as described above for meso-tetra-(3-methoxy-4-hydroxyphenyl)-porphyrin nickel (II) complex.

Synthesis of meso-(3-methoxy-4-hydroxyphenyl) (-[2.2]paracyclophanyl) porphyrin

Chemicals

Vanillin (Aldrich) 3.0 g (20 mmole), [2.2]-paracyclophane-4-carbaldehyde 4.72 g (20mmole), pyrrole (Aldrich) 2.8 mL (40 mmole), propionic acid (Fluka) 450 + 50 mL.

Procedure

The mixed condensation of these two aldehydes with pyrrole was achieved in the same way as the above described mixed condensation of [2.2]paracyclophane-4-carbaldehyde and benzaldehye with pyrrole; also the separation procedures were similar. The main component was meso-di(3-methoxy-4-hydroxyphenyl)-di([2.2]paracyclophanyl) porphyrin obtained with a yield of about 30% of the partially purified material. Metallation was carried out as described above.

Obtaining of the polymeric film (as the electrocatalyst)

The metalloporphyrin dissolved in 0.1 NaOHaq (concentration 2.5 x $10^{-4}$M) is used as the electrolyte in the electrochemical cell consisting of three electrodes: working electrode, counter electrode and a reference electrode, s.c.e. (The potential difference is measured between the working electrode but referred to s.c.e.). After beginning to scan the potential from 0 V to 1.0 V, one observes the formation of the film on the working electrode, which is a glass-carbon (or Pt) electrode. While the first scan results in the formation of a single monolayer or two monolayers, after ca. 20 scans a film of about 200 monolayers is formed; it shows metal-like conductivity. The whole process takes ca. 10 min.

The working electrode with the polymeric film formed on its surface is then removed from the cell, washed with water and conditioned by placing in 0.1 M NaOHaq (no porphyrin added) and scanned in the electrochemical cell about 15 times, as described above, with the scanning rate 100 mV/sec. Now, the electrode is ready for use, e.g., as the anode in the electrolytic oxidation of water, etc.

The drawings show the ability of the subject electrodes in the oxidation of methanol and water, where a substantially higher current is achieved at the same potential as compared to a carbon or platinum electrode. Thus, the advantage of the subject compositions over other electrodes is apparent from the results.

It is evident from the above results, that the subject invention provides novel compositions which may be used in efficient processes for production of hydrogen, oxygen, oxygenated organic compounds, as well as in other electrocatalytic processes. Because the compositions can be readily prepared, can be used with a wide variety of metals, so as to give a variety of potentials which can affect the course of the reactions, the subject system is very versatile. In addition, the subject catalysts are economic and efficient.

All publications and patent applications cited in this specification are herein incorporated by reference as if each individual publication or patent application were specifically and individually indicated to be incorporated by reference.

Although the foregoing invention has been described in some detail by way of illustration and example for purposes of clarity of understanding, it will be readily apparent to those of ordinary skill in the art in light of the teachings of this invention that certain changes and modifications may be made thereto without departing from the spirit or scope of the appended claims.

**Claims**

1. An electrocatalytic composition comprising polymerized metallated meso-aryl substituted metallated porphyrin, wherein said porphyrin is substituted with four (p-X-phenyl) groups, wherein X is a group having an atom bonded to the phenyl ring having an unshared pair of electrons, or at least one [2.2]paracyclophane, where the remaining meso positions are substituted or unsubstituted, and said porphyrin is metallated with a metal ion in a reduced form of Groups IB, IIB, VIB, VIIB and VIII.

2. An electrocatalytic composition comprising polymerized metallated meso-aryl substituted porphyrin according to Claim 1, wherein said remaining meso positions are substituted with phenyl.

3. An electrocatalytic composition comprising polymerized metallated meso-aryl substituted porphyrin according to Claim 1 or claim 2, wherein said [2.2]paracyclophane is present at at least 2 meso positions.

4. An electrocatalytic composition comprising polymerized metallated meso-aryl substituted metallated porphyrin according to any one of claims 1 to 3, wherein said metal ion is cobalt, iron, nickel or manganese.

5. An electrocatalytic composition comprising polymerized metallated meso-tetra-(p-X-phenyl)-porphyrin, wherein X is a group having an atom bonded to the phenyl ring having an unshared pair of electrons, and said porphyrin is metallated with a metal ion in a reduced form of Groups IB, IIB, VIB, VIIB and VIII.

6. A composition according to Claim 5, wherein said metal ion is cobalt, iron, nickel or manganese.

7. A composition according to Claim 5 or Claim 6, wherein said atom is oxygen, sulfur or nitrogen bonded to a hydrogen group.

8. A composition according to Claim 7, wherein said group is hydroxyl.

9. An electrocatalytic composition comprising polymerized metallated meso-[2.2]paracyclophane substituted porphyrin, wherein said porphyrin is metallated with a metal ion in a reduced form of Groups IB, IIB, VIB, VIIB and VIII.

10. A composition according to Claim 9, wherein said metal ion is cobalt, iron, nickel or manganese.

11. A composition according to Claim 9 or Claim 10, wherein said remaining meso-positions are substituted with phenyl groups.

12. A composition according to any preceding claim, wherein said polymerized meso-tetra-(p-X-phenyl)porphyrin, wherein X is a group having an atom bonded to the phenyl ring having an unshared pair of electrons, or meso-[2.2]-paracyclophane substituted porphyrin is produced by the method comprising:
in an electrochemical cell, comprising a metallated meso-tetra-(p-X-phenyl)porphyrin or meso-[2.2]-paracyclophane substituted porphyrin as an electrolyte, a working electrode and a counter electrode, scanning the potential from 0 to 1 V at least once.

13. A composition comprising a polymerized metallated meso-tetra-(p-hydroxyphenyl)porphyrin or meso-[2.2]paracyclophane-triphenyl-substituted porphyrin, wherein said porphyrin is metallated with a metal ion in a reduced from of Groups IB, IIB, VIB, VIIB and VIII.

14. A composition according to claim 13, wherein said metal is cobalt, iron, nickel or manganese.

15. A composition according to claim 13 or claim 14, wherein said polymerized meso-tetra-(p-hydroxyphenyl)-porphyrin is produced by the method comprising:
in an electromechanical cell, comprising a metallated meso-tetra-(p-hydroxyphenyl)porphyrin as an electrolyte, a working electrode and a counter electrode, scanning the potential from 0 to 1 V at least once.

16. An electrode comprising a conductor coated at least in part with a composition comprising a polymerized metallated meso-tetra-(p-X-phenyl)-porphyrin, wherein X is a group having an atom bonded to the phenyl ring having an unshared pair of electrons, or a meso-[2.2]paracyclophane substituted porphyrin, and said porphyrin is metallated with an element of Groups IB, IIB, VIB, VIIB and VIII.

17. An electrode according to claim 16, wherein said element is cobalt, iron, nickel or manganese.

18. An electrode according to claim 16 or claim 17, wherein said atom is oxygen, sulfur or nitrogen bonded to a hydrogen group.

19. An electrode according to claim 18, wherein said group is hydroxyl.

20. An electrode according to any one of claims 16 to 19, wherein said meso-[2.2]-paracyclophane substituted porphyrin is meso-triphenyl substituted.

21. An electrode according to any one of claims 16 to 20, wherein said conductive substrate is a noble metal.

22. An electrode according to any one of claims 16 to 20, wherein said substrate is comprised of glass.

23. An electrode according to any one of claims 16 to 22, wherein said polymerized meso-tetra-(p-X-phenyl)porphyrin or meso-[2.2]-paracyclophane substituted porphyrin is produced by the method comprising:
in an electrochemical cell, comprising a metallated meso-tetra-(p-X-phenyl)porphyrin meso-[2.2] paracyclophane substituted porphyrin as an electrolyte, a working electrode and a counter electrode, scanning the potential from 0 to 1 V at least once.

24. A fuel cell comprising an electrode according to any one of claims 16 to 23.

25. A method for producing a redox product from a compound capable of undergoing a redox reaction, said method comprising:
passing a current, at a potential sufficient to cause said reaction, through an electrochemical cell comprising an electrolyte and said compound in a conducting medium and an electrode according to any one of claims 16 to 23.

26. A method according to claim 25 wherein said reaction is any one of the following: oxidation of water, oxidation of methanol, oxidation of hydrazine, degradation by electrochemical oxidation of polychlorinated biphenyls.

19·01·90

FIG. 1

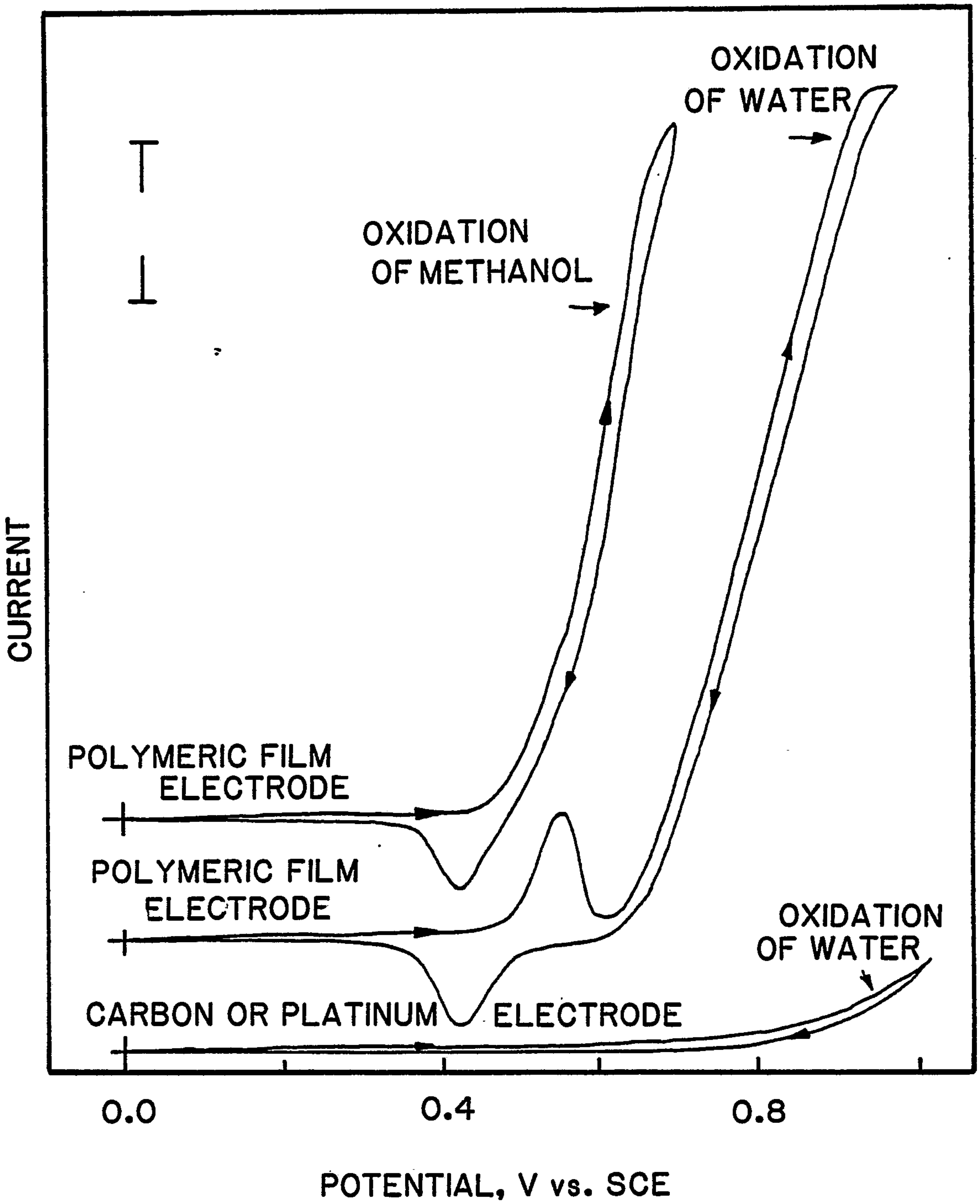
OXIDATION
OF WATER
OXIDATION
OF METHANOL
CURRENT
POLYMERIC FILM
ELECTRODE
POLYMERIC FILM
ELECTRODE
OXIDATION
OF WATER
CARBON OR PLATINUM ELECTRODE
0.0
0.4
0.8
POTENTIAL, V vs. SCE

19·01·90

FIG. 2

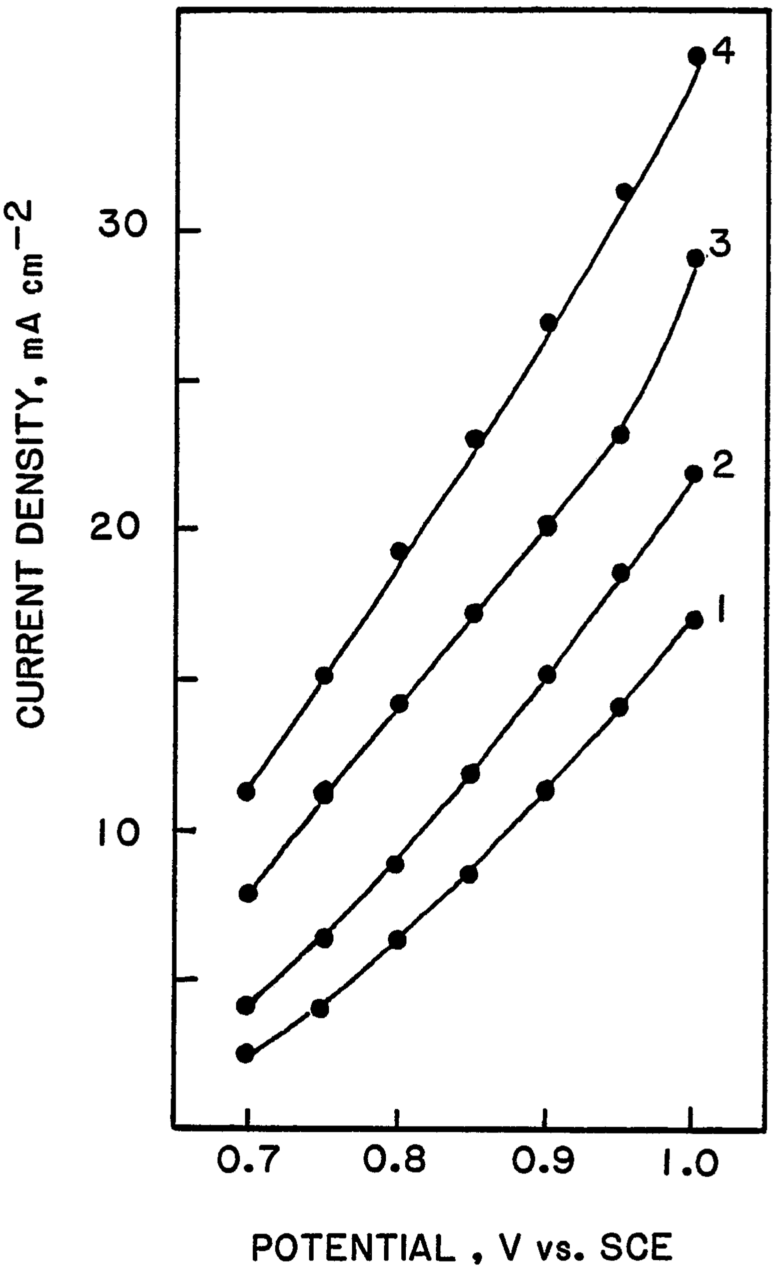
CURRENT DENSITY, mA cm$^{-2}$
30
20
10
0.7
0.8
0.9
1.0
POTENTIAL , V vs. SCE
1
2
3
4